(19) Europäisches Patentamt
European Patent Office
Office européen des brevets

(11) **EP 2 996 405 A1**

(12) **EUROPEAN PATENT APPLICATION**
published in accordance with Art. 153(4) EPC

(43) Date of publication:
**16.03.2016 Bulletin 2016/11**

(51) Int Cl.:
***H04W 52/02*** (2009.01)

(21) Application number: **13884327.1**

(22) Date of filing: **10.05.2013**

(86) International application number:
**PCT/CN2013/075465**

(87) International publication number:
**WO 2014/179985 (13.11.2014 Gazette 2014/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventors:
• **QIU, Tao**
**Beijing 100025 (CN)**

• **CHANG, Ningjuan**
**Beijing 100025 (CN)**
• **XU, Haibo**
**Beijing 100025 (CN)**

(74) Representative: **Wilding, Frances Ward**
**Haseltine Lake LLP**
**Lincoln House, 5th Floor**
**300 High Holborn**
**London WC1V 7JH (GB)**

(54) **METHOD AND DEVICE FOR CALCULATING PAGING OPPORTUNITY UNDER EXTENDED PAGING CYCLE**

(57)     Embodiments of the present application provide a method and apparatus for calculating a paging occasion under an extended paging cycle. The method includes: calculating a frame number (SFN) where a paging message occurs by user equipment (UE) by using a formula $SFN \bmod T = (T \operatorname{div} N) * (UE\_ID_{extended} \bmod N)$ ; calculating a subframe number ($i\_s$) where the paging message occurs by the UE by using a formula $i\_s = \text{floor}(UE\_ID_{extended}/N) \bmod N_s$; and determining by the UE a paging occasion of the UE under an extended paging cycle by using the frame number and the subframe number where the paging message occurs; where, T is a paging cycle of the UE, which is equal to a specific discontinuous reception (DRX) value of the UE; $UE\_ID_{extended} = IMSI \bmod (1024 \cdot 2^n)$, $UE\_D_{extended}$ being an identity index of the UE, IMSI is an international mobile subscriber identity of the UE, and $n$ is the number of bits of an extended SFN; $N = \min(T, nB)$ ; $N_s = \max(1, nB/T)$ ; and $nB \in \{4T, 2T, T, T/2, T/4, T/8, T/16, T/32\}$ . With the method and apparatus of the embodiments of the present application, a good solution is provided for calculating a paging occasion under an extended paging cycle.

101
calculating a frame number (SFN) where a paging message occurs by UE by using a formula
$SFN \bmod T = (T \operatorname{div} N) * (UE\_ID_{extended} \bmod N)$

102
calculating a subframe number ($i\_s$) where the paging message occurs by the UE by using a formula
$i\_s = \text{floor}(UE\_ID_{extended}/N) \bmod N_s$

103
determining by the UE a paging occasion of the UE under an extended paging cycle by using the frame number and the subframe number where the paging message occurs

Fig. 1

**Description**

Technical Field

The present application relates to the field of communications, and in particular to a method and apparatus for calculating a paging occasion under an extended paging cycle.

Background

MTC (machine type communications) refers to communications between machines needing no jamming, which is extremely widely in many scenarios, mainly including object tracing/following, environment/weather monitoring, and remote medical treatment, etc. For different MTC applications, there exist many differences between their properties. And for different application properties, different optimization methods may be employed.

On one hand, as the continuous development of wireless communications, improving an efficiency of energies of UE (user equipment, referred to as a user) becomes more and more important. And on the other hand, life of battery of most MTC equipment determines its survival time. Thus, energy saving plays a very important pole in MTC communications. As a major property of MTC application is that it is insensitive to time delay, it is a very efficient energy saving method to extend a paging cycle to reduce the number of times of monitoring the paging by the UE, especially to MTC applications of relatively low traffic. After the paging cycle is extended, behaviors of the UE in many aspects will be affected, in which a very important aspect is calculation of a paging occasion.

The paging occasion refers to a time instance possibly receiving a paging message. It was found by the inventors in the implementation of the present application that in an existing LTE-A system, the calculation of a paging occasion is directly related to a super frame number (SFN) of the system. Currently, a value range of the SFN of the system is [0, 1023]; in other words, a maximum paging cycle of the UE is 1024 frames. Therefore, in order to support a longer paging cycle, a value range of the SFN must be extended. After both the paging cycle of the UE and the SFN of the system are extended, if a conventional method is still used to calculate the paging occasion of the UE, a crucial problem shall be brought that the paging occasion of the UE is not uniformly distributed in a value range of the extended SFN, which will certainly affect the paging properties.

It should be noted that the above description of the background is merely provided for clear and complete explanation of the present application and for easy understanding by those skilled in the art. And it should not be understood that the above technical solution is known to those skilled in the art as it is described in the background of the present application.

Summary

An object of embodiments of the present application is to provide a method and apparatus for calculating a paging occasion under an extended paging cycle.

According to a first aspect of the embodiments of the present application, there is provided a method for calculating a paging occasion under an extended paging cycle, including:

calculating a frame number (SFN) where a paging message occurs by user equipment (UE) by using a formula $SFN \mod T = (T \operatorname{div} N) * (UE\_ID_{extended} \mod N)$;
calculating a subframe number (i_s) where the paging message occurs by the UE by using a formula $i\_s = \operatorname{floor}(UE\_ID_{extended} / N) \mod N_s$ ; and
determining by the UE a paging occasion of the UE under an extended paging cycle by using the frame number and the subframe number where the paging message occurs;
where, T is a paging cycle of the UE, which is equal to a specific discontinuous reception (DRX) value of the UE; $UE\_ID_{extended} = IMSI \mod (1024.2^n)$, $UE\_ID_{extended}$ being an identity index of the UE, IMSI is an international mobile subscriber identity of the UE, and $n$ is the number of bits of an extended SFN; $N = \min(T, nB)$ ; $N_s = \max(1, nB / T)$; and $nB \in \{4T, 2T, T, T/2, T/4, T/8, T/16, T,/32\}$.

According to a second aspect of the embodiments of the present application, there is provided a method for calculating a paging occasion under an extended paging cycle, including:

calculating an identity index $UE\_ID_{extended}$ of UE by a mobility management entity (MME) by using a formula $UE\_ID_{extended} = IMSI \mod (1024 \cdot 2^n)$ ; and
transmitting the identity index $UE\_ID_{extended}$ of the UE by the MME to an eNB, so that the eNB calculates a paging occasion of the UE according to the identity index;

where, IMSI is an international mobile subscriber identity of the UE, and *n* is the number of bits of an extended SFN.

According to a third aspect of the embodiments of the present application, there is provided a method for calculating a paging occasion under an extended paging cycle, including:

receiving by an eNB an identity index UE_ID$_{extended}$ of UE transmitted by an MME;
calculating a frame number (SFN) where a paging message of the UE occurs by the eNB by using a formula SFN mod T = (T div N) * (UE_ID$_{extended}$ mod N);
calculating a subframe number (i_s) where the paging message of the UE occurs by the eNB by using a formula i_s = floor (UE_ID$_{extended}$/N)mod N$_s$ ; and
determining by the eNB a paging occasion of the UE under an extended paging cycle by using the frame number (SFN) and subframe number (i_s) where the paging message of the UE occurs;
where, T is a paging cycle of the UE, which is equal to a specific DRX value of the UE; N = min(T,nB); N$_s$ = max(1,nB / T); and nB $\in$ {4T,2T,T,T/2,T/4,T/8,T/16,T/32}.

According to a forth aspect of the embodiments of the present application, there is provided UE, including:

a first calculating unit configured to calculate a frame number (SFN) where a paging message of the UE occurs by using a formula SFN mod T = (T div N) * (UE_ID$_{extended}$ mod N);
a second calculating unit configured to calculate a subframe number (i_s) where the paging message of the UE occurs by using a formula i_s = floor (UE_ID$_{extended}$/N)mod N$_s$ ; and
a determining unit configured to determine a paging occasion of the UE under an extended paging cycle by using the frame number where the paging message of the UE occurs calculated by the first calculating unit and the subframe number where the paging message of the UE occurs calculated by the second calculating unit;
where, T is a paging cycle of the UE, which is equal to a specific DRX value of the UE; (UE_ID$_{extended}$ = IMSI mod (1024 · 2$^n$), (UE_ID$_{extended}$ is an identity index of the UE, IMSI is an international mobile subscriber identity of the UE, and *n* is the number of bits of an extended SFN; N = min(T,nB) ; N$_s$ =max(1,nB/T) ; and nB $\in$ {4T,2T,T,T/2,T/4,T/8,T/16,T/32}.

According to a fifth aspect of the embodiments of the present application, there is provided an MME, including:

a calculating unit configured to calculate an identity index UE_ID$_{extended}$ of UE by using a formula (UE_ID$_{extended}$ = IMSI mod (1024 · 2$^n$); and
a transmitting unit configured to transmit to an eNB the identity index of the UE calculated by the calculating unit, so that the eNB calculates a paging occasion of the UE according to the identity index;
where, IMSI is an international mobile subscriber identity of the UE, and *n* is the number of bits of an extended SFN.

According to a sixth aspect of the embodiments of the present application, there is provided an eNB, including:

a receiving unit configured to receive an identity index (UE_ID$_{extended}$ of UE transmitted by an MME;
a first calculating unit configured to calculate a frame number (SFN) where a paging message of the UE occurs by using a formula SFN mod T = (T div N) * (UE_ID$_{extended}$ mod N);
a second calculating unit configured to calculate a subframe number (i_s) where the paging message of the UE occurs by using a formula i_s = floor (UE_ID$_{extended}$/N)mod N$_s$; and
a determining unit configured to determine a paging occasion of the UE under an extended paging cycle by using the frame number (SFN) where the paging message of the UE occurs calculated by the first calculating unit and the subframe number (i_s) where the paging message of the UE occurs calculated by the second calculating unit;
where, T is a paging cycle of the UE, which is equal to a specific DRX value of the UE; N = min(T,nB); N$_s$ = max(1,nB / T); and nB $\in$ {4T,2T,T,T/2,T/4,T/8,T/16,T/32}.

According to a seven aspect of the embodiments of the present application, there is provided a communication system, including the UE as claimed in claim 4, the MME as claimed in claim 5 and the eNB as claimed in claim 6.
According to an eighth aspect of the embodiments of the present application, there is provided a method for calculating a paging occasion under an extended paging cycle, including:

calculating an index SFN of an original SFN by UE by using a formula SFN mod T = (T div N) * (UE_ID mod N), and calculating an index SFN$_{index}$ of an extended SFN by using formulae $\mathrm{SFN}_{index}^{offset} = \mathrm{floor}(IMSI/1024)\,\mathrm{mod}\,2^n$

and $(\mathrm{SFN}_{index} - \mathrm{SFN}_{index}^{offset})\,\mathrm{mod}\,(T_{extended}/1024) = 0$;

determining a frame number where a paging message of the UE occurs by the UE according to the index SFN of the original SFN and the index SFN$_{index}$ of the extended SFN;

calculating a subframe number (i_s) where the paging message occurs by the UE by using a formula i_s = floor (UE_ID/N)mod N$_s$ ; and

determining by the UE a paging occasion of the UE under an extended paging cycle by using the frame number and the subframe number where the paging message occurs;

where, T is a paging cycle of the UE, which is equal to a minimum value of a specific DRX value of the UE and a default DRX value broadcasted in a system message; T$_{extended}$ is an extended paging cycle of the UE and is equal to the specific DRX value of the UE; UE_ID= IMSI mod (1024), UE_ID is an identity index of the UE, IMSI is an international mobile subscriber identity of the UE, and $n$ is the number of bits of the extended SFN; N = min(T,nB) ; N$_s$ = max(1,nB / T) ; and nB $\in$ {4T,2T,T,T/2,T/4,T/8,T/16,T/32}.

According to a ninth aspect of the embodiments of the present application, there is provided a method for calculating a paging occasion under an extended paging cycle, including:

calculating a relative offset $\mathrm{SFN}_{index}^{offset}$ of an index SFN$_{index}$ of an extended SFN by an MME by using a formula $\mathrm{SFN}_{index}^{offset} = \mathrm{floor}(\mathrm{IMSI}/1024)\,\mathrm{mod}\,2^n$ ; and

transmitting to an eNB the relative offset $\mathrm{SFN}_{index}^{offset}$ of the index SFN$_{index}$ of the extended SFN by the MME, so that the eNB calculates a paging occasion of UE according to the relative offset;

where, IMSI is an international mobile subscriber identity of the UE, and $n$ is the number of bits of the extended SFN.

According to a tenth aspect of the embodiments of the present application, there is provided a method for calculating a paging occasion under an extended paging cycle, including:

receiving by an eNB a relative offset $\mathrm{SFN}_{index}^{offset}$ of an index SFN$_{index}$ of an extended SFN transmitted by an MME;

determining the index SFN$_{index}$ of the extended SFN by the eNB by using a formula $(\mathrm{SFN}_{index} - \mathrm{SFN}_{index}^{offset})\,\mathrm{mod}\,(\mathrm{T}_{extended}/1024) = 0$ ;

calculating an index SFN of an original SFN by the eNB by using a formula SFN mod T = (T div N) * (UE_ID mod N);

determining a frame number where a paging message of the UE occurs by the eNB according to the index SFN of the original SFN and the index SFN$_{index}$ of the extended SFN;

calculating a subframe number (i_s) where the paging message of the UE occurs by the eNB by using a formula i_s = floor (UE_ID/N)mod N$_s$; and

determining by the eNB a paging occasion of the UE under an extended paging cycle by using the frame number and subframe number where the paging message occurs;

where, T is a paging cycle of the UE, which is equal to a minimum value of a specific DRX value of the UE and a default DRX value broadcasted in a system message; T$_{extended}$ is an extended paging cycle of the UE and is equal to the specific DRX value of the UE; UE_ID is an identity index of the UE; N =min(T,nB) ; N$_s$ = max(1,nB / T) ; and nB $\in$ {4T,2T,T,T/2,T/4,T/8,T/16,T/32}.

According to an eleventh aspect of the embodiments of the present application, there is provided UE, including:

a first calculating unit configured to calculate an index SFN of an original SFN by using a formula SFN mod T = (T div N) * (UE_ID mod N), and calculate an index SFN$_{index}$ of an extended SFN by using formulae $\mathrm{SFN}_{index}^{offset} = \mathrm{floor}(\mathrm{IMSI}/1024)\,\mathrm{mod}\,2^n$ and $(\mathrm{SFN}_{index} - \mathrm{SFN}_{index}^{offset})\,\mathrm{mod}\,(\mathrm{T}_{extended}/1024) = 0$ ;

a first determining unit configured to determine a frame number where a paging message of the UE occurs according to the index SFN of the original SFN and the index SFN$_{index}$ of the extended SFN calculated by the first calculating unit;

a second calculating unit configured to calculate a subframe number (i_s) where the paging message of the UE occurs by using a formula i_s = floor (UE_ID/N)mod N$_s$; and

a second determining unit configured to determine a paging occasion of the UE under an extended paging cycle by using the frame number where the paging message of the UE occurs determined by the first determining unit and the subframe number where the paging message of the UE occurs calculated by the second calculating unit;

where, T is a paging cycle of the UE, which is equal to a minimum value of a specific DRX value of the UE and a default DRX value broadcasted in a system message; T$_{extended}$ is an extended paging cycle of the UE and is equal to the specific DRX value of the UE; UE_ID= IMSI mod (1024), UE_ID is an identity index of the UE, IMSI is an international mobile subscriber identity of the UE, and $n$ is the number of bits of the extended SFN; N = min(T,nB) ; N$_s$ = max(1, nB / T) ; and nB $\in$ {4T,2T,T,T/2,T/4,T/8,T/16,T/32}.

According to a twelfth aspect of the embodiments of the present application, there is provided an MME, including:

a calculating unit configured to calculate a relative offset $\mathrm{SFN}_{index}^{offset}$ of an index $\mathrm{SFN}_{index}$ of an extended SFN by using a formula $\mathrm{SFN}_{index}^{offset} = \mathrm{floor}(\mathrm{IMSI}/1024)\bmod 2^n$; and

a transmitting unit configured to transmit to an eNB the relative offset $\mathrm{SFN}_{index}^{offset}$ of the index $\mathrm{SFN}_{index}$ of the extended SFN calculated by the calculating unit, so that the eNB calculates a paging occasion of the UE according to the relative offset;

where, IMSI is an international mobile subscriber identity of the UE, and $n$ is the number of bits of the extended SFN.

According to a thirteenth aspect of the embodiments of the present application, there is provided an eNB, including:

a receiving unit configured to receive a relative offset $\mathrm{SFN}_{index}^{offset}$ of an index $\mathrm{SFN}_{index}$ of an extended SFN transmitted by an MME;

a first determining unit configured to determine the index $\mathrm{SFN}_{index}$ of the extended SFN by using a formula $(\mathrm{SFN}_{index} - \mathrm{SFN}_{index}^{offset})\bmod (\mathrm{T}_{extended}/1024) = 0$;

a first calculating unit configured to calculate an index SFN of an original SFN by using a formula SFN mod T = (T div N) * (UE_ID mod N);

a second determining unit configured to determine a frame number where a paging message of the UE occurs according to the index SFN of the original SFN calculated by the first calculating unit and the index $\mathrm{SFN}_{index}$ of the extended SFN determined by the first determining unit;

a second calculating unit configured to calculate a subframe number (i_s) where the paging message of the UE occurs by using a formula i_s = floor (UE_ID/N)mod $N_s$; and

a third determining unit configured to determine a paging occasion of the UE under an extended paging cycle by using the frame number where the paging message of the UE occurs determined by the second determining unit and the subframe number where the paging message of the UE occurs calculated by the second calculating unit;

where, T is a paging cycle of the UE, which is equal to a minimum value of a specific DRX value of the UE and a default DRX value broadcasted in a system message; $\mathrm{T}_{extended}$ is an extended paging cycle of the UE and is equal to the specific DRX value of the UE; UE_ID is an identity index of the UE; $n$ is the number of bits of the extended SFN; N = min(T,nB) ; $N_s$ = max(1,nB / T) ; and nB $\in$ {4T,2T,T,T/2,T/4,T/8,T/16,T/32}.

According to a fourteenth aspect of the embodiments of the present application, there is provided a communication system, including the UE as claimed in claim 11, the MIME as claimed in claim 12 and the eNB as claimed in claim 13.

According to another aspect of the embodiments of the present application, there is provided a computer-readable program, wherein when the program is executed in terminal equipment, the program enables a computer to carry out the method for calculating a paging occasion under an extended paging cycle as described in the first or the eighth aspect in the terminal equipment.

According to a further aspect of the embodiments of the present application, there is provided a storage medium in which a computer-readable program is stored, wherein the computer-readable program enables a computer to carry out the method for calculating a paging occasion under an extended paging cycle as described in the first or the eighth aspect in the terminal equipment.

According to still another aspect of the embodiments of the present application, there is provided a computer-readable program, wherein when the program is executed in an MME, the program enables a computer to carry out the method for calculating a paging occasion under an extended paging cycle as described in the second or the ninth aspect in the MME.

According to still another aspect of the embodiments of the present application, there is provided a storage medium in which a computer-readable program is stored, wherein the computer-readable program enables a computer to carry out the method for calculating a paging occasion under an extended paging cycle as described in the second or the ninth aspect in an MME.

According to still another aspect of the embodiments of the present application, there is provided a computer-readable program, wherein when the program is executed in an eNB, the program enables a computer to carry out the method for calculating a paging occasion under an extended paging cycle as described in the third or the tenth aspect in the eNB.

According to still another aspect of the embodiments of the present application, there is provided a storage medium in which a computer-readable program is stored, wherein the computer-readable program enables a computer to carry out the method for calculating a paging occasion under an extended paging cycle as described in the third or the tenth aspect in an eNB.

An advantage of the embodiments of the present application exists in that with the method and apparatus of the embodiments of the present application, a good solution is provided for calculating a paging occasion under an extended paging cycle.

With reference to the following description and drawings, the particular embodiments of the present application are disclosed in detail, and the principle of the present application and the manners of use are indicated. It should be understood that the scope of the embodiments of the present application is not limited thereto. The embodiments of the present application contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Many aspects of the application can be better understood with reference to the following drawings. The components in the drawings are not necessarily to scale, emphasis instead being placed upon clearly illustrating the principles of the present application. To facilitate illustrating and describing some parts of the application, corresponding portions of the drawings may be exaggerated or reduced in size. Elements and features depicted in one drawing or embodiment of the application may be combined with elements and features depicted in one or more additional drawings or embodiments. Moreover, in the drawings, like reference numerals designate corresponding parts throughout the several views and may be used to designate like or similar parts in more than one embodiments. In the drawings:

Figure 1 is a flowchart of the method for calculating a paging occasion of Embodiment 1 of the present application;
Figure 2 is a flowchart of the method for calculating a paging occasion of Embodiment 2 of the present application;
Figure 3 is a flowchart of the method for calculating a paging occasion of Embodiment 3 of the present application;
Figure 4 is a schematic diagram of a structure of UE corresponding to the method for calculating a paging occasion of Embodiment 1;
Figure 5 is a schematic diagram of a structure of an MME corresponding to the method for calculating a paging occasion of Embodiment 2;
Figure 6 is a schematic diagram of a structure of an eNB corresponding to the method for calculating a paging occasion of Embodiment 3;
Figure 7 is a flowchart of the method for calculating a paging occasion of Embodiment 7 of the present application;
Figure 8 is a flowchart of the method for calculating a paging occasion of Embodiment 8 of the present application;
Figure 9 is a flowchart of the method for calculating a paging occasion of Embodiment 9 of the present application;
Figure 10 is a schematic diagram of a structure of UE corresponding to the method for calculating a paging occasion of Embodiment 7;
Figure 11 is a schematic diagram of a structure of an MME corresponding to the method for calculating a paging occasion of Embodiment 8; and
Figure 12 is a schematic diagram of a structure of an eNB corresponding to the method for calculating a paging occasion of Embodiment 9.

Detailed Description

The foregoing and other features of the embodiments of the present application shall become apparent with reference to the drawings and the following description. These embodiments are illustrative only, and are not intended to limit the present application. For the principle and modes of implementation of the present application to be easily understood by those skilled in the art, the modes of implementation of the present application shall be described taking a method for calculating a paging occasion in an LTE system as an example. However, it should be understood that the present application is not limited to the above system, and is applicable to other systems related to calculating a paging occasion.

In the embodiments of the present application, in order to extend the paging occasion of the UE, the SFN of the system must be extended first. If $n$ bits are introduced to extend the SFN of the system, a value range of the extended SFN is $[0, 1024 * 2^n -1]$. Regarding the extended SFN, the embodiments of the present application propose two methods for calculating a paging occasion of the UE.

The first method for calculating a paging occasion of the UE shall be described below with reference to embodiments 1-3.

Embodiment 1

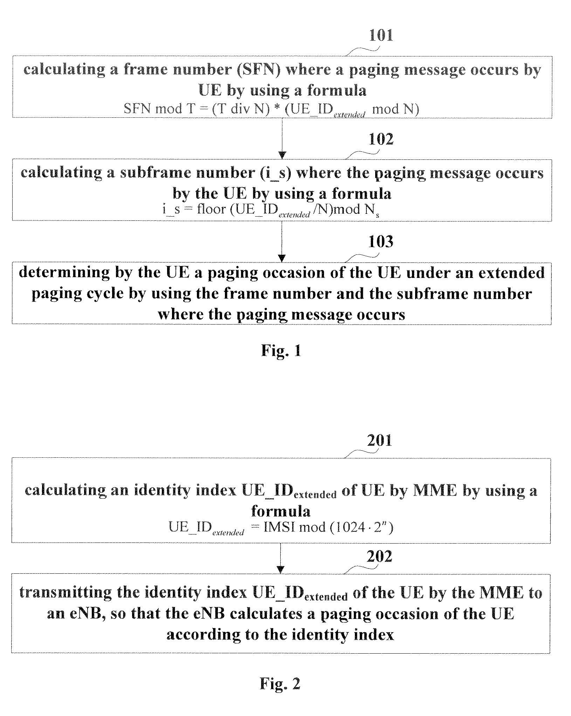

An embodiment of the present application provides a method for calculating a paging occasion under an extended paging cycle, which is applicable to UE. Fig. 1 is a flowchart of the method. Referring to Fig. 1, the method includes:

> step 101: calculating a frame number (SFN) where a paging message occurs by the UE by using a formula SFN mod T = (T div N) * (UE_ID$_{extended}$ mod N);
> where, "mod" is modulo operation, and "div" is division operation, the same below;
> step 102: calculating a subframe number (i_s) where the paging message occurs by the UE by using a formula i_s = floor (UE_ID$_{extended}$/N)mod N$_s$ ;
> where, "floor" is rounding down operation, the same below;
> step 103: determining by the UE a paging occasion of the UE under an extended paging cycle by using the frame number and the subframe number where the paging message occurs;
> where, T is a paging cycle of the UE, which is equal to a specific discontinuous reception (DRX) value of the UE; (UE_ID$_{extended}$ = IMSI mod (1024 $\cdot$ 2$^n$), UE_ID$_{extended}$ being an identity index of the UE, IMSI is an international mobile subscriber identity of the UE, and $n$ is the number of bits of the extended SFN; N = min(T,nB) ; N$_s$ = max(1, nB / T); and nB $\in$ {4T,2T,T,T/2,T/4,T/8,T/16,T/32}.

In this embodiment, identical to existing standards, N and N$_s$ have no specific physical meaning, which are determined by the adjustable parameter nB and the paging cycle T jointly, and their values are determined by a value of the adjustable parameter nB, thereby determining the frame number (SFN) and the subframe number (i_s) where the paging message of the UE occurs.

In this embodiment, different from existing standards, the paging cycle T of the UE is determined by the specific DRX (discontinuous reception) value of the UE only, and a default DRX value broadcasted in a system message is ignored, thereby achieving a goal of extending a paging cycle.

In this embodiment, different from existing standards, as n bits of SFN are introduced, the value range of the SFN is extended from [0, 1023] to [0, 1024*2$^n$-1], and as to the identity index of the UE, it is obtained by calculating by using the formula (UE_ID$_{extended}$ = IMSI mod (1024 $\cdot$ 2$^n$), thereby ensuring that the paging occasion of the UE is uniformly distributed in the value range of the extended SFN.

With the method of the embodiment of the present application, a method for calculating the paging occasion under the extended paging cycle is provided, and that the paging occasion of the UE is uniformly distributed in the value range of the extended SFN is ensured.

Embodiment 2

An embodiment of the present application further provides a method for calculating a paging occasion under an extended paging cycle, which is applicable to an MME (mobility management entity). Fig. 2 is a flowchart of the method. Referring to Fig. 2, the method includes:

> step 201: calculating an identity index UE_ID$_{extended}$ of UE by the MME by using a formula UE_ID$_{extended}$ = IMSI mod (1024 $\cdot$ 2$^n$); and
>
> step 202: transmitting the identity index UE_ID$_{extended}$ of the UE by the MME to an eNB, so that the eNB calculates a paging occasion of the UE according to the identity index;

where, IMSI is an international mobile subscriber identity of the UE, and $n$ is the number of bits of an extended SFN.

In this embodiment, in order to ensure that understanding of the UE and the eNB is consistent, the eNB also needs to calculate the paging occasion of the UE, so as to transmit a paging message at a position corresponding to the calculated paging occasion. However, as the eNB does not know the IMSI of the UE, the MME needs to calculate the identity index UE_ID$_{extended}$ of each UE according to the IMSI of each UE known by it, and transmits the UE_ID$_{extended}$ to the eNB, thereby the eNB may calculate the paging occasion of each UE; wherein, the method for calculating the paging occasion of the UE by the eNB shall be described in the following embodiment.

When the UE calculates its paging occasion according to the method of Embodiment 1, the MME calculates UE_ID$_{extended}$ according to the method of this embodiment and provides it to the eNB, thereby ensuring that understanding to the paging occasion of the UE for the UE and the eNB is consistent, ensuring transmission and reception of the paging message and overcoming the problem of ununiformity of distribution of the paging occasion after the SFN is extended.

Embodiment 3

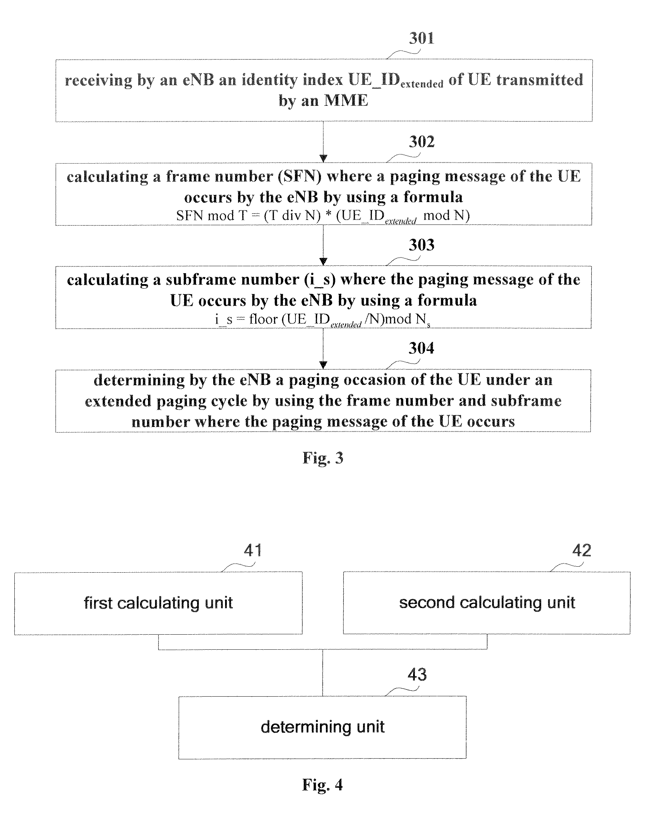

An embodiment of the present application further provides a method for calculating a paging occasion under an extended paging cycle, which is applicable to an eNB. Fig. 3 is a flowchart of the method. Referring to Fig. 3, the method includes:

step 301: receiving by the eNB an identity index $UE\_ID_{extended}$ of UE transmitted by an MME;

step 302: calculating a frame number (SFN) where a paging message of the UE occurs by the eNB by using a formula SFN mod T = (T div N) * ($UE\_ID_{extended}$ mod N);

step 303: calculating a subframe number (i_s) where the paging message of the UE occurs by the eNB by using a formula i_s = floor ($UE\_ID_{extended}$/N)mod $N_s$ ; and

step 304: determining by the eNB a paging occasion of the UE under an extended paging cycle by using the frame number (SFN) and subframe number (i_s) where the paging message of the UE occurs;

where, T is a paging cycle of the UE, which is equal to a specific DRX value of the UE; N = min(T,nB); $N_s$ = max(1,nB / T); and nB $\in$ {4T,2T,T,T/2,T/4,T/8,T/16,T/32}.
In this embodiment, corresponding to the method of Embodiment 2, the eNB may receive the $UE\_ID_{extended}$ of the UE transmitted by the MME, and calculate the paging occasion (determined by the frame number and the subframe number where the paging message occurs uniquely) of the UE accordingly; and calculation method is similar to the method for calculating the paging occasion by the UE of Embodiment 1, with an exception that, in Embodiment 1, the UE calculates its identity index by using the formula $UE\_ID_{extended}$ = IMSI mod (1024 · $2^n$), while in this embodiment, the eNB acquires the identity index of the UE from the MME.
In this embodiment, after calculating the paging occasion of the UE, the eNB may transmit a paging message to the UE at a position corresponding to the paging occasion. And as the understanding to the paging occasion for the UE and the eNB is consistent, the UE may monitor the paging message at the corresponding position, thereby ensuring transmission and reception of the paging message.
With the method of this embodiment, the eNB calculates the paging occasion of the UE according to the $UE\_ID_{extended}$ of the UE transmitted by the MME, thereby ensuring that understanding to the paging occasion of the UE for the UE and the eNB is consistent, ensuring transmission and reception of the paging message and overcoming the problem of ununiformity of distribution of the paging occasion after the SFN is extended.
In the above embodiments 1-3, the orders of the execution of the steps are illustrative only, and the embodiments of the present application are not limited thereto. In a concrete implementation, the steps may be executed in a combined manner or in other orders, depending on implementation.
Corresponding to the methods in embodiments 1-3, the embodiments of the present application further provide UE, an MME and an eNB, which shall be described below with reference to embodiments 4-6.

Embodiment 4

An embodiment of the present application further provides user equipment (UE). As the principle of the UE for solving problems is similar to that of the method of Embodiment 1, the implementation of the method of Embodiment 1 may be referred to for the implementation of the UE, with the identical contents being not going to be described any further.
Fig. 4 is a schematic diagram of a structure of the UE of this embodiment. Referring to Fig. 4, the UE includes:

a first calculating unit 41 configured to calculate a frame number (SFN) where a paging message of the UE occurs by using a formula SFN mod T = (T div N) * ($UE\_ID_{extended}$ mod N) ;
a second calculating unit 42 configured to calculate a subframe number (i_s) where the paging message of the UE occurs by using a formula i_s = floor ($UE\_ID_{extended}$/N)mod $N_s$ ; and
a determining unit 43 configured to determine a paging occasion of the UE under an extended paging cycle by using the frame number where the paging message of the UE occurs calculated by the first calculating unit 41 and the subframe number where the paging message of the UE occurs calculated by the second calculating unit 42;
where, T is a paging cycle of the UE, which is equal to a specific DRX value of the UE; $UE\_ID_{extended}$ = IMSI mod (1024 · $2^n$), $UE\_ID_{extended}$ is an identity index of the UE, IMSI is an international mobile subscriber identity of the UE, and $n$ is the number of bits of the extended SFN; N = min(T,nB) ; $N_s$ = max(1,nB / T) ; and nB $\in$

{4T,2T,T,T/2,T/4,T/8,T/16,T/32}.

By calculating the paging occasion by the UE of this embodiment, uniform distribution of the paging occasion in the value range of the extended SFN under the extended paging cycle is ensured.

Embodiment 5

An embodiment of the present application further provides a mobility management entity (MME). As the principle of the MME for solving problems is similar to that of the method of Embodiment 2, the implementation of the method of Embodiment 2 may be referred to for the implementation of the MME, with the identical contents being not going to be described any further.

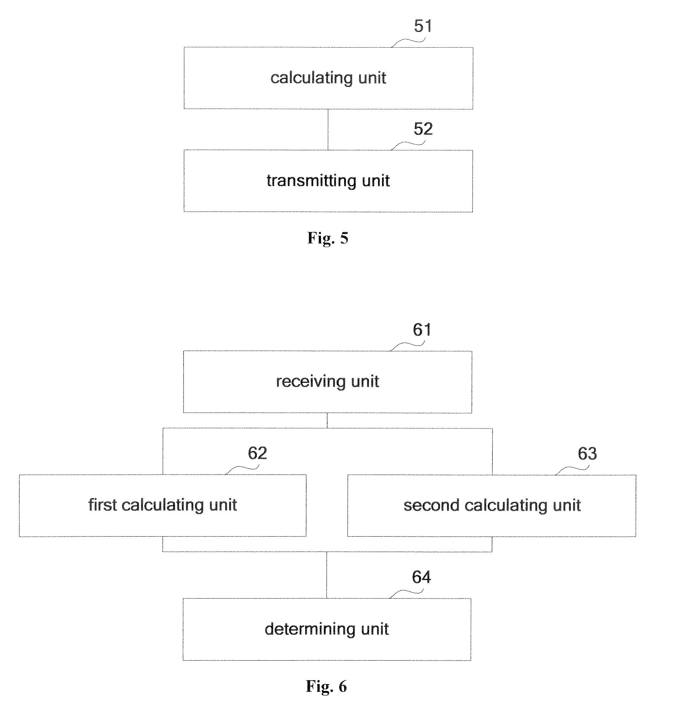

Fig. 5 is a schematic diagram of a structure of the MME of this embodiment. Referring to Fig. 5, the MME includes:

a calculating unit 51 configured to calculate an identity index $UE\_ID_{extended}$ of UE by using a formula $UE\_ID_{extended}$ = IMSI mod $(1024 \cdot 2^n)$; and
a transmitting unit 52 configured to transmit to an eNB the identity index of the UE calculated by the calculating unit 51, so that the eNB calculates a paging occasion of the UE according to the identity index;

where, IMSI is an international mobile subscriber identity of the UE, and $n$ is the number of bits of the extended SFN.

By calculating the identity index of the UE by the MME of this embodiment and providing it to the eNB, the eNB is assisted in calculating the paging occasion of the UE, thereby ensuring that understanding to the paging occasion of the UE by the UE and the eNB is consistent, ensuring transmission and reception of the paging message and overcoming the problem of ununiformity of distribution of the paging occasion after the SFN is extended.

Embodiment 6

An embodiment of the present application further provides an eNB. As the principle of the eNB for solving problems is similar to that of the method of Embodiment 3, the implementation of the method of Embodiment 3 may be referred to for the implementation of the eNB, with the identical contents being not going to be described any further.

Fig. 6 is a schematic diagram of a structure of the eNB of this embodiment. Referring to Fig. 6, the eNB includes:

a receiving unit 61 configured to receive an identity index $UE\_ID_{extended}$ of UE transmitted by an MME;

a first calculating unit 62 configured to calculate a frame number (SFN) where a paging message of the UE occurs by using a formula SFN mod T = (T divN) * $(UE\_ID_{extended}$ mod N);

a second calculating unit 63 configured to calculate a subframe number (i_s) where the paging message of the UE occurs by using a formula i_s = floor $(UE\_ID_{extended}$ /N)mod $N_s$ ; and

a determining unit 64 configured to determine a paging occasion of the UE under an extended paging cycle by using the frame number (SFN) where the paging message of the UE occurs calculated by the first calculating unit 62 and the subframe number (i_s) where the paging message of the UE occurs calculated by the second calculating unit 63;

where, T is a paging cycle of the UE, which is equal to a specific DRX value of the UE; N = min(T,nB) ; $N_s$ = max(1,nB / T) ; and nB $\in$ {4T,2T,T,T/2,T/4,T/8,T/16,T/32}.

By calculating the paging occasion of the UE by the eNB of this embodiment according to the received identity index of the UE transmitted by the MME, understanding to the paging occasion of the UE by the UE and the eNB being consistent is ensured, transmission and reception of the paging message is ensured and the problem of ununiformity of distribution of the paging occasion after the SFN is extended is overcome.

The second method for calculating the paging occasion of the UE of the embodiment of the present application shall be described below with reference to embodiments 7-9.

Embodiment 7

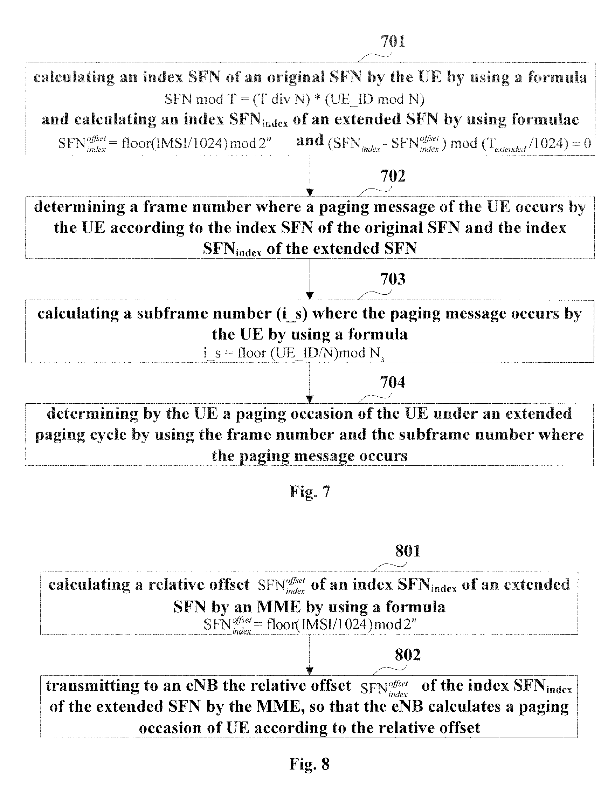

An embodiment of the present application further provides a method for calculating a paging occasion under an extended paging cycle, which is applicable to UE. Fig. 7 is a flowchart of the method. Referring to Fig. 7, the method includes:

step 701: calculating an index SFN of an original SFN by the UE by using a formula SFN mod T = (T div N) * (UE_ID mod N), and calculating an index $SFN_{index}$ of an extended SFN by using formulae

$$SFN_{index}^{offset} = \text{floor}(IMSI/1024) \bmod 2^n \text{ and } (SFN_{index} - SFN_{index}^{offset}) \bmod (T_{extended}/1024) = 0;$$

step 702: determining a frame number where a paging message of the UE occurs by the UE according to the index SFN of the original SFN and the index $SFN_{index}$ of the extended SFN;

wherein both SFN and $SFN_{index}$ are binary numbers; these two values are combined, that is, a binary number to which $SFN_{index}$ corresponds is placed to the left of a binary number to which SFN corresponds, so as to combine them into one value; the obtained value is the binary numbers; where the paging occasion of the UE occurs, and a highest efficient bit is the leftmost bit;

for example, if $SFN_{index}$ is 100 and SFN is 00100, it may be determined in step 702 that the frame number where the paging occasion of the U E occurs is 100 00100, and the highest efficient bit is the leftmost bit ' 1';

step 703: calculating a subframe number (i_s) where the paging message occurs by the UE by using a formula i_s = floor (UE_ID/N)mod $N_s$ ; and

step 704: determining by the UE a paging occasion of the UE under an extended paging cycle by using the frame number and the subframe number where the paging message occurs;

where, T is a paging cycle of the UE, which is equal to a minimum value of a specific DRX value of the UE and a default DRX value broadcasted in a system message; $T_{extended}$ is an extended paging cycle of the UE and is equal to the specific DRX value of the UE; UE_ID= IMSI mod (1024), UE_ID is an identity index of the UE, IMSI is an international mobile subscriber identity of the UE, and $n$ is the number of bits of the extended SFN; N = min(T,nB) ; $N_s$ = max(1,nB/T) ; and nB $\in$ {4T,2/T,T,T/2,T/4,T/8,T/16,T/32}.

In this embodiment, a new parameter $SFN_{index}^{offset}$ is introduced, which is used for indexing a relative offset of the extended $n$ bits of SFN, and the index $SFN_{index}$ of the extended $n$ bits of SFN may be determined by using the parameter

and $(SFN_{index} - SFN_{index}^{offset}) \bmod (T_{extended}/1024) = 0$ ; where, both $SFN_{index}$ and $SFN_{index}^{offset}$ belong to a range [0,$2^n$ -1], and $T_{extended}$ denotes the extended paging cycle of the UE.

In this embodiment, an exact SFN value of the paging occasion of the UE may be determined after two parameters, an index SFN of the original SFN and an index $SFN_{index}$ of the extended SFN, are obtained.

In this embodiment, the subframe number of each frame where the paging occasion of the UE occurs may be calculated by using the formula i_s = floor (UE_ID/N)mod $N_s$ ; wherein meanings of the parameters are as described above, which shall not be described herein any further.

In the method of this embodiment, a new parameter is introduced for calculating the index $SFN_{index}$ of the extended SFN, which is used in connection with the index SFN of the original SFN for determining the frame number where the paging occasion of the UE occurs, thereby that the paging occasion of the UE is uniformly distributed in the value range of the extended SFN can be ensured, and transmission and reception of the paging message can be ensured.

Embodiment 8

An embodiment of the present application further provides a method for calculating a paging occasion under an extended paging cycle, which is applicable to an MME. Fig. 8 is a flowchart of the method. Referring to Fig. 8, the method includes:

step 801: calculating a relative offset $SFN_{index}^{offset}$ of an index $SFN_{index}$ of an extended SFN by an MME by using a formula $SFN_{index}^{offset} = \text{floor}(IMSI/1024) \bmod 2^n$ ; and

step 802: transmitting to an eNB the relative offset $SFN_{index}^{offset}$ of the index $SFN_{index}$ of the extended SFN by the MME, so that the eNB calculates a paging occasion of UE according to the relative offset;

where, IMSI is an international mobile subscriber identity of the UE, and $n$ is the number of bits of the extended SFN.

In this embodiment, similar to Embodiment 2, in order to ensure that the understanding for the UE and the eNB is consistent, the eNB also needs to calculate the paging occasion of the UE, so as to transmit the paging message at the position to which the calculated paging occasion corresponds. However, as the eNB does not know the IMSI of the UE, the MME needs to calculate the parameter $SFN_{index}^{offset}$ of each UE according to the IMSI of each UE known by it, and transmit the parameter to the eNB, thereby the eNB may calculate the paging occasion of each UE; wherein, the method for calculating the paging occasion of the UE by the eNB shall be described in the following embodiment.

When the UE calculates its paging occasion according to the method of Embodiment 7, the MME calculates

$SFN_{index}^{offset}$ according to the method of this embodiment and provides it to the eNB, thereby ensuring that understanding to the paging occasion of the UE by the UE and the eNB is consistent, ensuring transmission and reception of the paging message and overcoming the problem of ununiformity of distribution of the paging occasion after the SFN is extended.

Embodiment 9

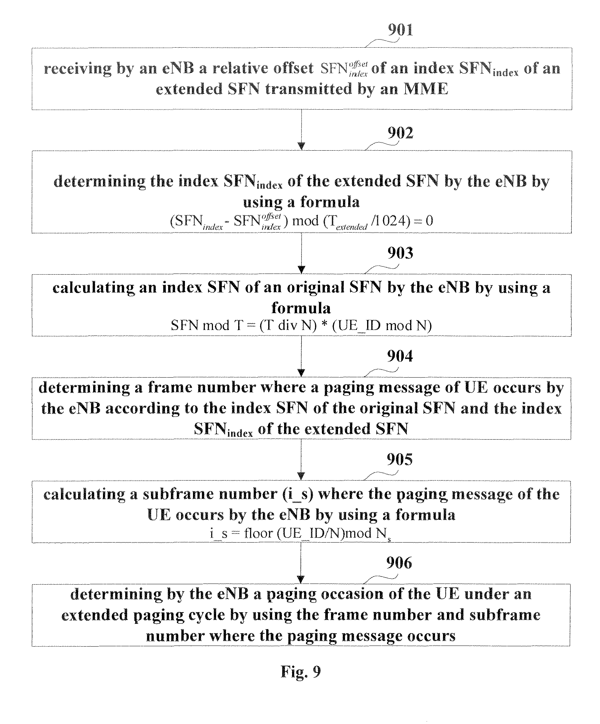

An embodiment of the present application further provides a method for calculating a paging occasion under an extended paging cycle, which is applicable to an eNB. Fig. 9 is a flowchart of the method. Referring to Fig. 9, the method includes:

step 901: receiving by the eNB a relative offset $SFN_{index}^{offset}$ of an index $SFN_{index}$ of an extended SFN transmitted by an MME;

step 902: determining the index $SFN_{index}$ of the extended SFN by the eNB by using a formula $(SFN_{index} - SFN_{index}^{offset}) \bmod (T_{extended}/1024) = 0$;

step 903: calculating an index SFN of an original SFN by the eNB by using a formula SFN mod T = (T div N) * (UE_ID mod N);

step 904: determining a frame number where a paging message of UE occurs by the eNB according to the index SFN of the original SFN and the index $SFN_{index}$ of the extended SFN;

step 905: calculating a subframe number (i_s) where the paging message of the UE occurs by the eNB by using a formula i_s = floor (UE_ID/N)mod $N_s$ ; and

step 906: determining by the eNB a paging occasion of the UE under an extended paging cycle by using the frame number and subframe number where the paging message occurs;

where, T is a paging cycle of the UE, which is equal to a minimum value of a specific DRX value of the UE and a default DRX value broadcasted in a system message; $T_{extended}$ is an extended paging cycle of the UE and is equal to the specific DRX value of the UE; UE_ID= IMSI mod (1024), UE_ID is an identity index of the UE; IMSI is an international mobile subscriber identity of the UE, the UE_ID is obtained by the eNB from the MME as described above; $n$ is the number of bits of the extended SFN; N = min(T,nB); $N_s$ = max(1,nB / T) ; and nB $\in$ {4T,2T,T,T/2,T/4,T/8,T/16,T/32}.

In this embodiment, corresponding to the method of Embodiment 8, the eNB may receive $SFN_{index}^{offset}$ transmitted by the MME, and calculate the paging occasion (determined by the frame number and the subframe number where the paging message occurs uniquely) of the UE accordingly; and calculation method is similar to the method for calculating the paging occasion by the UE of Embodiment 7, with an exception that, in Embodiment 7, the UE calculates $SFN_{index}^{offset}$ according to the formula $SFN_{index}^{offset} = floor(IMSI/1024) \bmod 2^n$ , while in this embodiment, the eNB acquires $SFN_{index}^{offset}$ from the MME.

In this embodiment, after calculating the paging occasion of the UE, the eNB may transmit a paging message to the UE at a position corresponding to the paging occasion. And as the understanding to the paging occasion of the UE by the UE and the eNB is consistent, the UE may monitor the paging message at the corresponding position, thereby ensuring transmission and reception of the paging message.

With the method of this embodiment, the eNB calculates the paging occasion of the UE according to $SFN_{index}^{offset}$ transmitted by the MME, thereby ensuring that understanding to the paging occasion of the UE by the UE and the eNB is consistent, ensuring transmission and reception of the paging message and overcoming the problem of ununiformity of distribution of the paging occasion after the SFN is extended.

In the above embodiments 7-9, the orders of the execution of the steps are illustrative only, and the embodiments of the present application are not limited thereto. In a concrete implementation, the steps may be executed in a combined manner or in other orders, depending on implementation.

Corresponding to the methods in embodiments 7-9, the embodiments of the present application further provide UE, an MME and an eNB, which shall be described below with reference to embodiments 10-12.

Embodiment 10

An embodiment of the present application further provides user equipment (UE). As the principle of the UE for solving problems is similar to that of the method of Embodiment 7, the implementation of the method of Embodiment 7 may be referred to for the implementation of the UE, with the identical contents being not going to be described any further.

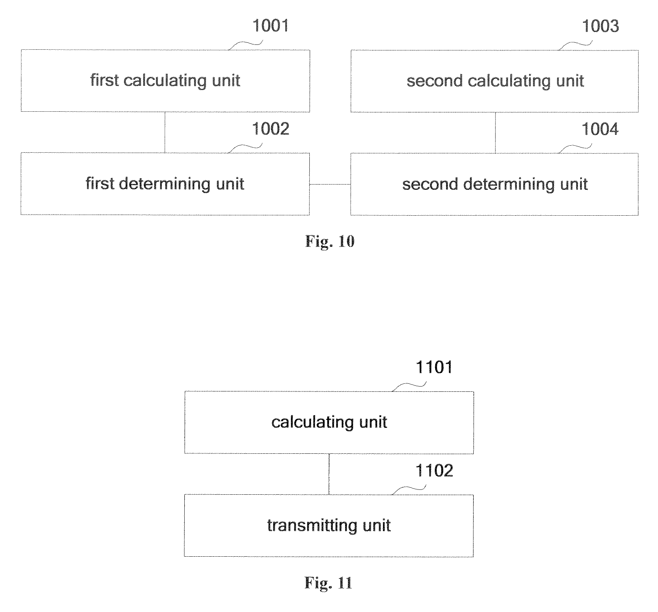

Fig. 10 is a schematic diagram of a structure of the UE of this embodiment. Referring to Fig. 10, the UE includes:

a first calculating unit 1001 configured to calculate an index SFN of an original SFN by using a formula SFN mod T = (T div N) * (UE_ID mod N), and calculate an index $SFN_{index}$ of an extended SFN by using formulae $SFN_{index}^{offset} = floor(IMSI/1024) \bmod 2^n$ and $(SFN_{index} - SFN_{index}^{offset}) \bmod (T_{extended}/1024) = 0$ ;

a first determining unit 1002 configured to determine a frame number where a paging message of the UE occurs according to the index SFN of the original SFN and the index $SFN_{index}$ of the extended SFN calculated by the first calculating unit 1001;

a second calculating unit 1003 configured to calculate a subframe number (i_s) where the paging message of the UE occurs by using a formula i_s = floor (UE_ID/N)mod $N_s$ ; and

a second determining unit 1004 configured to determine a paging occasion of the UE under an extended paging cycle by using the frame number where the paging message of the UE occurs determined by the first determining unit 1002 and the subframe number where the paging message of the UE occurs calculated by the second calculating unit 1003;

where, T is a paging cycle of the UE, which is equal to a minimum value of a specific DRX value of the UE and a default DRX value broadcasted in a system message; $T_{extended}$ is an extended paging cycle of the UE and is equal to the specific DRX value of the UE; UE_ID= IMSI mod (1024), UE_ID is an identity index of the UE, IMSI is an international mobile subscriber identity of the UE, and *n* is the number of bits of the extended SFN; N=min(T,nB) ; $N_s$ = max(1,nB / T) ; and nB ∈ {4T,2T,T,T/2,T/4,T/8,T/16,T/32}.

By calculating the paging occasion by the UE of this embodiment, uniform distribution of the paging occasion in the value range of the extended SFN under the extended paging cycle is ensured.

Embodiment 11

An embodiment of the present application further provides a mobility management entity (MME). As the principle of the MME for solving problems is similar to that of the method of Embodiment 8, the implementation of the method of Embodiment 8 may be referred to for the implementation of the MME, with the identical contents being not going to be described any further.

Fig. 11 is a schematic diagram of a structure of the MME of this embodiment. Referring to Fig. 11, the MME includes:

a calculating unit 1101 configured to calculate a relative offset $SFN_{index}^{offset}$ of an index $SFN_{index}$ of an extended SFN by using a formula $SFN_{index}^{offset} = floor(IMSI/1024) \bmod 2^n$ ; and

a transmitting unit 1102 configured to transmit to an eNB the relative offset $SFN_{index}^{offset}$ of the index $SFN_{index}$ of the extended SFN calculated by the calculating unit 1101, so that the eNB calculates a paging occasion of UE according to the relative offset;

where, IMSI is an international mobile subscriber identity of the UE, and *n* is the number of bits of the extended SFN.

By calculating $SFN_{index}^{offset}$ and providing it to the eNB by the MME of this embodiment, the eNB is assisted in calculating the paging occasion of the UE, thereby ensuring that understanding to the paging occasion of the UE by the UE and the eNB is consistent, ensuring transmission and reception of the paging message and overcoming the problem of ununiformity of distribution of the paging occasion after the SFN is extended.

Embodiment 12

An embodiment of the present application further provides an eNB. As the principle of the eNB for solving problems is similar to that of the method of Embodiment 9, the implementation of the method of Embodiment 9 may be referred to for the implementation of the eNB, with the identical contents being not going to be described any further.

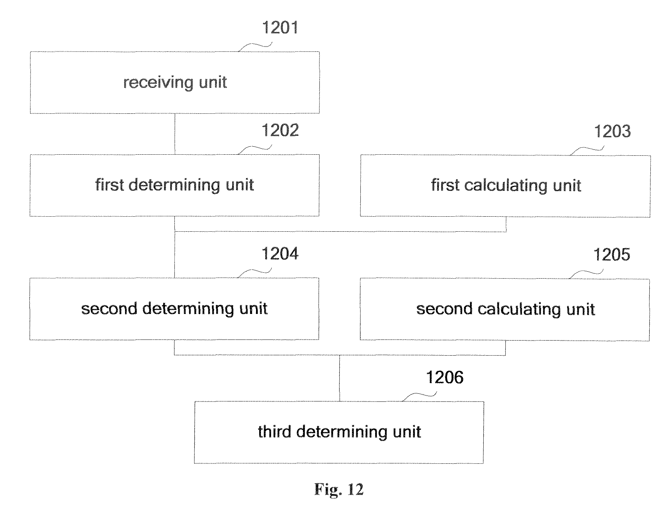

Fig. 12 is a schematic diagram of a structure of the eNB of this embodiment. Referring to Fig. 12, the eNB includes:

a receiving unit 1201 configured to receive a relative offset $SFN_{index}^{offset}$ of an index $SFN_{index}$ of an extended SFN transmitted by an MME;

a first determining unit 1202 configured to determine the index $SFN_{index}$ of the extended SFN by using a formula $(SFN_{index} - SFN_{index}^{offset}) \bmod (T_{extended}/1024) = 0$ ;

a first calculating unit 1203 configured to calculate an index SFN of an original SFN by using a formula SFN mod T = (T div N) * (UE_ID mod N);

a second determining unit 1204 configured to determine a frame number where a paging message of the UE occurs according to the index SFN of the original SFN calculated by the first calculating unit 1203 and the index $SFN_{index}$ of the extended SFN determined by the first determining unit 1202;

a second calculating unit 1205 configured to calculate a subframe number (i_s) where the paging message of the UE occurs by using a formula i_s = floor (UE_ID/N)mod $N_s$ ; and

a third determining unit 1206 configured to determine a paging occasion of the UE under an extended paging cycle by using the frame number where the paging message of the UE occurs determined by the second determining unit 1204 and the subframe number where the paging message of the UE occurs calculated by the second calculating unit 1205;

where, T is a paging cycle of the UE, which is equal to a minimum value of a specific DRX value of the UE and a default DRX value broadcasted in a system message; $T_{extended}$ is an extended paging cycle of the UE and is equal to the specific DRX value of the UE; UE_ID= IMSI mod (1024), UE_ID is an identity index of the UE, IMSI is an international mobile subscriber identity of the UE, and UE_ID is obtained by the eNB from the MME, as described above; n is the number of bits of the extended super frame number (SFN); N = min(T,nB) ; $N_s$ = max(1,nB / T); and nB ∈ {4T,2T,T,T/2,T/4,T/8,T/16,T/32}.

By calculating the paging occasion of the UE by the eNB of this embodiment according to $SFN^{offset}_{index}$ transmitted by the MME, understanding to the paging occasion of the UE by the UE and the eNB is consistent is ensured, transmission and reception of the paging message is ensured and the problem of ununiformity of distribution of the paging occasion after the SFN is extended is overcome.

An embodiment of the present application further provides a communication system, including the UE as described in Embodiment 4, the MME as described in Embodiment 5 and the eNB as described in Embodiment 6.

An embodiment of the present application further provides a communication system, including the UE as described in Embodiment 10, the MME as described in Embodiment 11 and the eNB as described in Embodiment 12.

An embodiment of the present application further provides a computer-readable program, wherein when the program is executed in terminal equipment, the program enables a computer to carry out the method for calculating a paging occasion under an extended paging cycle as described in Embodiment 1 or 7 in the terminal equipment.

An embodiment of the present application further provides a storage medium in which a computer-readable program is stored, wherein the computer-readable program enables a computer to carry out the method for calculating a paging occasion under an extended paging cycle as described in Embodiment 1 or 7 in terminal equipment.

An embodiment of the present application further provides a computer-readable program, wherein when the program is executed in an MME, the program enables a computer to carry out the method for calculating a paging occasion under an extended paging cycle as described in Embodiment 2 or 8 in the MME.

An embodiment of the present application further provides a storage medium in which a computer-readable program is stored, wherein the computer-readable program enables a computer to carry out the method for calculating a paging occasion under an extended paging cycle as described in Embodiment 2 or 8 in an MME.

An embodiment of the present application further provides a computer-readable program, wherein when the program is executed in an eNB, the program enables a computer to carry out the method for calculating a paging occasion under an extended paging cycle as described in Embodiment 3 or 9 in the eNB.

An embodiment of the present application further provides a storage medium in which a computer-readable program is stored, wherein the computer-readable program enables a computer to carry out the method for calculating a paging occasion under an extended paging cycle as described in Embodiment 3 or 9 in an eNB.

The above apparatuses and methods of the present application may be implemented by hardware, or by hardware in combination with software. The present application relates to such a computer-readable program that when the program is executed by a logic device, the logic device is enabled to carry out the apparatus or components as described above, or to carry out the methods or steps as described above. The present application also relates to a storage medium for storing the above program, such as a hard disk, a floppy disk, a CD, a DVD, and a flash memory, etc.

The present application is described above with reference to particular embodiments. However, it should be understood by those skilled in the art that such a description is illustrative only, and not intended to limit the protection scope of the present application. Various variants and modifications may be made by those skilled in the art according to the spirits and principle of the present application, and such variants and modifications fall within the scope of the present application.

**Claims**

1. A method for calculating a paging occasion under an extended paging cycle, comprising:

calculating a frame number (SFN) where a paging message occurs by user equipment (UE) by using a formula SFN mod T = (T div N) * (UE_ID$_{extended}$ mod N);

calculating a subframe number (i_s) where the paging message occurs by the UE by using a formula i_s = floor (UE_ID$_{extended}$/N)mod N$_s$; and

determining by the UE a paging occasion of the UE under an extended paging cycle by using the frame number and the subframe number where the paging message occurs;

where, T is a paging cycle of the UE, which is equal to a specific discontinuous reception (DRX) value of the UE; UE_ID$_{extended}$ = IMSI mod (1024 · $2^n$), UE_ID$_{extended}$ being an identity index of the UE, IMSI is an international mobile subscriber identity of the UE, and $n$ is the number of bits of an extended SFN; N = min(T,nB) ; N$_s$ = max(1, nB / T); and nB $\in$ {4T,2T,T,T/2,T/4,T/8,T/16,T/32}.

2. A method for calculating a paging occasion under an extended paging cycle, comprising:

calculating an identity index UE_ID$_{extended}$ of UE by a mobility management entity (MME) by using a formula UE_ID$_{extended}$ = IMSI mod (1024 · $2^n$) ; and

transmitting the identity index UE_ID$_{extended}$ of the UE by the MME to an eNB, so that the eNB calculates a paging occasion of the UE according to the identity index;

where, IMSI is an international mobile subscriber identity of the UE, and $n$ is the number of bits of an extended SFN.

3. A method for calculating a paging occasion under an extended paging cycle, comprising:

receiving by an eNB an identity index UE_ID$_{extended}$ of UE transmitted by an MME;

calculating a frame number (SFN) where a paging message of the UE occurs by the eNB by using a formula SFN mod T = (T div N) * (UE_ID$_{extended}$ mod N) ;

calculating a subframe number (i_s) where the paging message of the UE occurs by the eNB by using a formula i_s = floor (UE_ID$_{extended}$ /N)mod N$_s$ ; and

determining by the eNB a paging occasion of the UE under an extended paging cycle by using the frame number (SFN) and subframe number (i_s) where the paging message of the UE occurs;

where, T is a paging cycle of the UE, which is equal to a specific DRX value of the UE; N = min(T,nB); N$_s$ = max(1, nB / T); and nB $\in$ {4T,2T,T,T/2,T/4,T/8,T/16,T/32}.

4. UE, comprising:

a first calculating unit configured to calculate a frame number (SFN) where a paging message of the UE occurs by using a formula SFN mod T = (T div N) * (UE_ID$_{extended}$ mod N);

a second calculating unit configured to calculate a subframe number (i_s) where the paging message of the UE occurs by using a formula i_s = floor (UE_ID$_{extended}$/N)mod N$_s$; and

a determining unit configured to determine a paging occasion of the UE under an extended paging cycle by using the frame number where the paging message of the UE occurs calculated by the first calculating unit and the subframe number where the paging message of the UE occurs calculated by the second calculating unit;

where, T is a paging cycle of the UE, which is equal to a specific DRX value of the UE; UE_ID$_{extended}$ = IMSI mod (1024 · $2^n$), UE_ID$_{extended}$ is an identity index of the UE, IMSI is an international mobile subscriber identity of the UE, and $n$ is the number of bits of an extended SFN; N = min(T,nB) ; N$_s$ =max(1,nB/T) ; and nB $\in$ {4T,2T,T,T/2,T/4,T/8,T/16,T/32}.

5. An MME, comprising:

a calculating unit configured to calculate an identity index UE_ID$_{extended}$ of UE by using a formula UE_ID$_{extended}$ = IMSI mod (1024 · $2^n$); and

a transmitting unit configured to transmit to an eNB the identity index of the UE calculated by the calculating unit, so that the eNB calculates a paging occasion of the UE according to the identity index;

where, IMSI is an international mobile subscriber identity of the UE, and $n$ is the number of bits of an extended SFN.

6. An eNB, comprising:

a receiving unit configured to receive an identity index $UE\_ID_{extended}$ of UE transmitted by an MME;

a first calculating unit configured to calculate a frame number (SFN) where a paging message of the UE occurs by using a formula $SFN \bmod T = (T \operatorname{div} N) * (UE\_ID_{extended} \bmod N)$;

a second calculating unit configured to calculate a subframe number (i_s) where the paging message of the UE occurs by using a formula $i\_s = \operatorname{floor}(UE\_ID_{extended}/N) \bmod N_s$; and

a determining unit configured to determine a paging occasion of the UE under an extended paging cycle by using the frame number (SFN) where the paging message of the UE occurs calculated by the first calculating unit and the subframe number (i_s) where the paging message of the UE occurs calculated by the second calculating unit;

where, T is a paging cycle of the UE, which is equal to a specific DRX value of the UE; $N = \min(T, nB)$; $N_s = \max(1, nB / T)$; and $nB \in \{4T, 2T, T, T/2, T/4, T/8, T/16, T/32\}$.

7. A communication system, comprising the UE as claimed in claim 4, the MME as claimed in claim 5 and the eNB as claimed in claim 6.

8. A method for calculating a paging occasion under an extended paging cycle, comprising:

calculating an index SFN of an original SFN by UE by using a formula $SFN \bmod T = (T \operatorname{div} N) * (UE\_ID \bmod N)$, and calculating an index $SFN_{index}$ of an extended SFN by using formulae

$$SFN_{index}^{offset} = \operatorname{floor}(IMSI/1024) \bmod 2^n \text{ and } (SFN_{index} - SFN_{index}^{offset}) \bmod (T_{extended}/1024) = 0;$$

determining a frame number where a paging message of the UE occurs by the UE according to the index SFN of the original SFN and the index $SFN_{index}$ of the extended SFN;

calculating a subframe number (i_s) where the paging message occurs by the UE by using a formula $i\_s = \operatorname{floor}(UE\_ID/N) \bmod N_s$; and

determining by the UE a paging occasion of the UE under an extended paging cycle by using the frame number and the subframe number where the paging message occurs;

where, T is a paging cycle of the UE, which is equal to a minimum value of a specific DRX value of the UE and a default DRX value broadcasted in a system message; $T_{extended}$ is an extended paging cycle of the UE and is equal to the specific DRX value of the UE; $UE\_ID = IMSI \bmod (1024)$, UE_ID is an identity index of the UE, IMSI is an international mobile subscriber identity of the UE, and *n* is the number of bits of the extended SFN; $N = \min(T, nB)$; $N_s = \max(1, nB/T)$; and $nB \in \{4T, 2T, T, T/2, T/4, T/8, T/16, T/32\}$.

9. A method for calculating a paging occasion under an extended paging cycle, comprising:

calculating a relative offset $SFN_{index}^{offset}$ of an index $SFN_{index}$ of an extended SFN by an MME by using a formula $SFN_{index}^{offset} = \operatorname{floor}(IMSI/1024) \bmod 2^n$; and

transmitting to an eNB the relative offset $SFN_{index}^{offset}$ of the index $SFN_{index}$ of the extended SFN by the MME, so that the eNB calculates a paging occasion of UE according to the relative offset;

where, IMSI is an international mobile subscriber identity of the UE, and *n* is the number of bits of the extended SFN.

10. A method for calculating a paging occasion under an extended paging cycle, comprising:

receiving by an eNB a relative offset $SFN_{index}^{offset}$ of an index $SFN_{index}$ of an extended SFN transmitted by an MME;

determining the index $SFN_{index}$ of the extended SFN by the eNB by using a formula

$$(SFN_{index} - SFN_{index}^{offset}) \bmod (T_{extended}/1024) = 0;$$

calculating an index SFN of an original SFN by the eNB by using a formula $SFN \bmod T = (T \operatorname{div} N) * (UE\_ID \bmod N)$;

determining a frame number where a paging message of UE occurs by the eNB according to the index SFN of the original SFN and the index $SFN_{index}$ of the extended SFN;

calculating a subframe number (i_s) where the paging message of the UE occurs by the eNB by using a formula $i\_s = \operatorname{floor}(UE\_ID/N) \bmod N_s$; and

determining by the eNB a paging occasion of the UE under an extended paging cycle by using the frame number and subframe number where the paging message occurs;

where, T is a paging cycle of the UE, which is equal to a minimum value of a specific DRX value of the UE and a default DRX value broadcasted in a system message; $T_{extended}$ is an extended paging cycle of the UE and is equal to the specific DRX value of the UE; UE_ID is an identity index of the UE; N=min(T,nB) ; $N_s$ = max(1, nB / T); and nB $\in$ {4T,2T,T,T/2,T/4,T/8,T/16,T/32}.

11. UE, comprising:

a first calculating unit configured to calculate an index SFN of an original SFN by using a formula SFN mod T = (T div N) * (UE_ID mod N), and calculate an index $SFN_{index}$ of an extended SFN by using formulae

$$SFN_{index}^{offset} = \text{floor}(IMSI/1024)\,\text{mod}\,2^n \text{ and } (SFN_{index} - SFN_{index}^{offset})\,\text{mod}\,(T_{extended}/1024) = 0 ;$$

a first determining unit configured to determine a frame number where a paging message of the UE occurs according to the index SFN of the original SFN and the index $SFN_{index}$ of the extended SFN calculated by the first calculating unit;

a second calculating unit configured to calculate a subframe number (i_s) where the paging message of the UE occurs by using a formula i_s = floor (UE_ID/N)mod $N_s$; and

a second determining unit configured to determine a paging occasion of the UE under an extended paging cycle by using the frame number where the paging message of the UE occurs determined by the first determining unit and the subframe number where the paging message of the UE occurs calculated by the second calculating unit;

where, T is a paging cycle of the UE, which is equal to a minimum value of a specific DRX value of the UE and a default DRX value broadcasted in a system message; $T_{extended}$ is an extended paging cycle of the UE and is equal to the specific DRX value of the UE; UE_ID= IMSI mod (1024), UE_ID is an identity index of the UE, IMSI is an international mobile subscriber identity of the UE, and $n$ is the number of bits of the extended SFN; N=min(T,nB) ; $N_s$ =max(1,nB/T) ; and nB $\in$ {4T,2T,T,T/2,T/4,T/8,T/16,T/32}.

12. An MME, comprising:

a calculating unit configured to calculate a relative offset $SFN_{index}^{offset}$ of an index $SFN_{index}$ of an extended SFN by using a formula $SFN_{index}^{offset} = \text{floor}(IMSI/1024)\,\text{mod}\,2^n$ ; and

a transmitting unit configured to transmit to an eNB the relative offset $SFN_{index}^{offset}$ of the index $SFN_{index}$ of the extended SFN calculated by the calculating unit, so that the eNB calculates a paging occasion of UE according to the relative offset;

where, IMSI is an international mobile subscriber identity of the UE, and $n$ is the number of bits of the extended SFN.

13. An eNB, comprising:

a receiving unit configured to receive a relative offset $SFN_{index}^{offset}$ of an index $SFN_{index}$ of an extended SFN transmitted by an MME;

a first determining unit configured to determine the index $SFN_{index}$ of the extended SFN by using a formula $(SFN_{index} - SFN_{index}^{offset})\,\text{mod}\,(T_{extended}/1024) = 0$ ;

a first calculating unit configured to calculate an index SFN of an original SFN by using a formula SFN mod T = (T div N) * (UE_ID mod N);

a second determining unit configured to determine a frame number where a paging message of the UE occurs according to the index SFN of the original SFN calculated by the first calculating unit and the index $SFN_{index}$ of the extended SFN determined by the first determining unit;

a second calculating unit configured to calculate a subframe number (i_s) where the paging message of the UE occurs by using a formula i_s = floor (UE_ID/N)mod $N_s$ ; and

a third determining unit configured to determine a paging occasion of the UE under an extended paging cycle by using the frame number where the paging message of the UE occurs determined by the second determining unit and the subframe number where the paging message of the UE occurs calculated by the second calculating unit;

where, T is a paging cycle of the UE, which is equal to a minimum value of a specific DRX value of the UE and a default DRX value broadcasted in a system message; $T_{extended}$ is an extended paging cycle of the UE and is equal to the specific DRX value of the UE; UE_ID is an identity index of the UE; $n$ is the number of bits of the extended SFN; N=min(T,nB) ; $N_s$ = max(1,nB / T) ; and nB $\in$ {4T,2T,T,T/2,T/4,T/8,T/16,T/32}.

14. A communication system, comprising the UE as claimed in claim 11, the MME as claimed in claim 12 and the eNB as claimed in claim 13.

15. A computer-readable program, wherein when the program is executed in terminal equipment, the program enables a computer to carry out the method for calculating a paging occasion under an extended paging cycle as claimed in either one of claims 1 and 8 in the terminal equipment.

16. A storage medium in which a computer-readable program is stored, wherein the computer-readable program enables a computer to carry out the method for calculating a paging occasion under an extended paging cycle as claimed in either one of claims 1 and 8 in terminal equipment.

17. A computer-readable program, wherein when the program is executed in an MME, the program enables a computer to carry out the method for calculating a paging occasion under an extended paging cycle as claimed in either one of claims 2 and 9 in the MME.

18. A storage medium in which a computer-readable program is stored, wherein the computer-readable program enables a computer to carry out the method for calculating a paging occasion under an extended paging cycle as claimed in either one of claims 2 and 9 in an MME.

19. A computer-readable program, wherein when the program is executed in an eNB, the program enables a computer to carry out the method for calculating a paging occasion under an extended paging cycle as claimed in either one of claims 3 and 10 in the eNB.

20. A storage medium in which a computer-readable program is stored, wherein the computer-readable program enables a computer to carry out the method for calculating a paging occasion under an extended paging cycle as claimed in either one of claims 3 and 10 in an eNB.

101

calculating a frame number (SFN) where a paging message occurs by
UE by using a formula
$$SFN \bmod T = (T \operatorname{div} N) * (UE\_ID_{extended} \bmod N)$$

102

calculating a subframe number (i_s) where the paging message occurs
by the UE by using a formula
$$i\_s = floor (UE\_ID_{extended}/N) \bmod N_s$$

103

determining by the UE a paging occasion of the UE under an extended
paging cycle by using the frame number and the subframe number
where the paging message occurs

Fig. 1

201

calculating an identity index $UE\_ID_{extended}$ of UE by MME by using a
formula
$$UE\_ID_{extended} = IMSI \bmod (1024 \cdot 2^n)$$

202

transmitting the identity index $UE\_ID_{extended}$ of the UE by the MME to
an eNB, so that the eNB calculates a paging occasion of the UE
according to the identity index

Fig. 2

301

receiving by an eNB an identity index UE_ID$_{extended}$ of UE transmitted by an MME

302

calculating a frame number (SFN) where a paging message of the UE occurs by the eNB by using a formula
SFN mod T = (T div N) * (UE_ID$_{extended}$ mod N)

303

calculating a subframe number (i_s) where the paging message of the UE occurs by the eNB by using a formula
i_s = floor (UE_ID$_{extended}$/N)mod N$_s$

304

determining by the eNB a paging occasion of the UE under an extended paging cycle by using the frame number and subframe number where the paging message of the UE occurs

Fig. 3

41

first calculating unit

42

second calculating unit

43

determining unit

Fig. 4

51

```
calculating unit
```

52

```
transmitting unit
```

**Fig. 5**

61

```
receiving unit
```

62                                              63

```
first calculating unit          second calculating unit
```

64

```
determining unit
```

**Fig. 6**

**701**

calculating an index SFN of an original SFN by the UE by using a formula
$$SFN \bmod T = (T \operatorname{div} N) * (UE\_ID \bmod N)$$
and calculating an index $SFN_{index}$ of an extended SFN by using formulae
$$SFN_{index}^{offset} = floor(IMSI/1024) \bmod 2^n \quad \textbf{and} \quad (SFN_{index} - SFN_{index}^{offset}) \bmod (T_{extended}/1024) = 0$$

**702**

determining a frame number where a paging message of the UE occurs by the UE according to the index SFN of the original SFN and the index $SFN_{index}$ of the extended SFN

**703**

calculating a subframe number (i_s) where the paging message occurs by the UE by using a formula
$$i\_s = floor(UE\_ID/N) \bmod N_s$$

**704**

determining by the UE a paging occasion of the UE under an extended paging cycle by using the frame number and the subframe number where the paging message occurs

Fig. 7

**801**

calculating a relative offset $SFN_{index}^{offset}$ of an index $SFN_{index}$ of an extended SFN by an MME by using a formula
$$SFN_{index}^{offset} = floor(IMSI/1024) \bmod 2^n$$

**802**

transmitting to an eNB the relative offset $SFN_{index}^{offset}$ of the index $SFN_{index}$ of the extended SFN by the MME, so that the eNB calculates a paging occasion of UE according to the relative offset

Fig. 8

901

receiving by an eNB a relative offset $SFN_{index}^{offset}$ of an index $SFN_{index}$ of an extended SFN transmitted by an MME

902

determining the index $SFN_{index}$ of the extended SFN by the eNB by using a formula

$$(SFN_{index} - SFN_{index}^{offset}) \bmod (T_{extended} / 1024) = 0$$

903

calculating an index SFN of an original SFN by the eNB by using a formula

$$SFN \bmod T = (T \operatorname{div} N) * (UE\_ID \bmod N)$$

904

determining a frame number where a paging message of UE occurs by the eNB according to the index SFN of the original SFN and the index $SFN_{index}$ of the extended SFN

905

calculating a subframe number (i_s) where the paging message of the UE occurs by the eNB by using a formula

$$i\_s = floor(UE\_ID/N) \bmod N_s$$

906

determining by the eNB a paging occasion of the UE under an extended paging cycle by using the frame number and subframe number where the paging message occurs

Fig. 9

1001

first calculating unit

1002

first determining unit

1003

second calculating unit

1004

second determining unit

Fig. 10

1101

calculating unit

1102

transmitting unit

Fig. 11

1201

receiving unit

1202

first determining unit

1203

first calculating unit

1204

second determining unit

1205

second calculating unit

1206

third determining unit

Fig. 12

# NTERNATIONAL SEARCH REPORT

| International application No. |
| --- |
| PCT/CN2013/075465 |

### A.  CLASSIFICATION OF SUBJECT MATTER

H04W 52/02 (2009.01) i

According to International Patent Classification (IPC) or to both national classification and IPC

### B.  FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS, CPRSABS, SIPOABS, DWPI, USTXT, CNKI, GOOGLE: paging, cycle, time, extend+, discontinuous w reception, drx, ue, user w equipment, ue 1w id, frame number

### C.  DOCUMENTS CONSIDERED TO BE RELEVANT

| Category* | Citation of document, with indication, where appropriate, of the relevant passages | Relevant to claim No. |
| --- | --- | --- |
| X | CN 102970750 A (BEIJING NORTHERN FIBERHOME TECHNOLOGIES CO., LTD.) 13 March 2013 (13.03.2013) description, pages 4 and 5, and figure 1 | 3, 6, 19, 20 |
| A | CN 102917444 A (HUAWEI TECHNOLOGIES CO., LTD.) 06 February 2013 (06.02.2013) the whole document | 1-20 |
| A | CN 101690348 A (TELEFONAKTIEBOLAGET L M ERICSSON) 31 March 2010 (31.03.2010) the whole document | 1-20 |
| A | US 2012/0300685 A1 (SAMSUNG ELECTRONICS CO., LTD.) 29 November 2012 (29.11.2012) the whole document | 1-20 |
| A | WO 2012/046866 A1 (NEC CORP. et al.) 12 April 2012 (12.04.2012) the whole document | 1-20 |

☐ Further documents are listed in the continuation of Box C.  ☒ See patent family annex.

| *    Special categories of cited documents: | "T"  later document published after the international filing date or priority date and not in conflict with the application but cited to understand the principle or theory underlying the invention |
| --- | --- |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"document member of the same patent family |

| Date of the actual completion of the international search | Date of mailing of the international search report |
| --- | --- |
| 24 January 2014 (24.01.2014) | 20 February 2014 (20.02.2014) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Qiang<br><br>Telephone No. (86-10) 62413696 |
| --- | --- |

Form PCT/ISA /210 (second sheet) (July 2009)

## INTERNATIONAL SEARCH REPORT
### Information on patent family members

| | International application No. |
|---|---|
| | PCT/CN2013/075465 |

| Patent Documents referred in the Report | Publication Date | Patent Family | Publication Date |
|---|---|---|---|
| CN 102970750 A | 13.03.2013 | None | |
| CN 102917444 A | 06.02.2013 | WO 2013017006 A1 | 07.02.2013 |
| CN 101690348 A | 31.03.2010 | EP 2158782 A1 | 03.03.2010 |
| | | US 2010184458 A1 | 22.07.2010 |
| | | WO 2008143563 A1 | 27.11.2008 |
| | | AU 2007353893 A1 | 27.11.2008 |
| | | IN 200907032 P1 | 25.06.2010 |
| | | MX 2009010693 A | 31.10.2009 |
| US 2012/0300685 A1 | 29.11.2012 | WO 2011087233 A2 | 21.07.2011 |
| | | KR 20110083454 A | 20.07.2011 |
| WO 2012/046866 A1 | 12.04.2012 | JP 2013539311 A | 17.10.2013 |
| | | CN 103155693 A | 12.06.2013 |
| | | US 2013176890 A1 | 11.07.2013 |
| | | GB 2484347 A | 11.04.2012 |
| | | EP 2625923 A1 | 14.08.2013 |

Form PCT/ISA /210 (patent family annex) (July 2009)